(19) **Europäisches Patentamt**
**European Patent Office**
**Office européen des brevets**

(11) **EP 2 933 655 B1**

(12) **EUROPÄISCHE PATENTSCHRIFT**

(45) Veröffentlichungstag und Bekanntmachung des Hinweises auf die Patenterteilung:
**08.06.2016   Patentblatt 2016/23**

(51) Int Cl.:
*G01S 17/42* *(2006.01)*       *G01S 17/89* *(2006.01)*
*G01S 7/481* *(2006.01)*       *H01F 38/18* *(2006.01)*

(21) Anmeldenummer: **15155877.2**

(22) Anmeldetag: **20.02.2015**

(54) **OPTOELEKTRONISCHER SENSOR UND VERFAHREN ZUR ERFASSUNG VON OBJEKTEN IN EINEM ÜBERWACHUNGSBEREICH**

OPTOELECTRONIC SENSOR AND METHOD FOR DETECTING OBJECTS IN A SURVEILLANCE AREA

CAPTEUR OPTOÉLECTRONIQUE ET PROCÉDÉ DESTINÉ À LA DÉTECTION D'OBJETS DANS UNE ZONE DE SURVEILLANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2014   DE 102014105261**

(43) Veröffentlichungstag der Anmeldung:
**21.10.2015   Patentblatt 2015/43**

(73) Patentinhaber: **SICK AG**
**79183 Waldkirch (DE)**

(72) Erfinder:
• **Rothenberger, Bernd**
**78355 Rheinhausen (DE)**
• **Hug, Gottfried**
**79183 Waldkirch (DE)**

• **Lipschinski, Dennis**
**79348 Freiamt (DE)**
• **Szerbakowski, Boris**
**79183 Waldkirch (DE)**
• **Winterer, Konrad**
**79215 Elzach-Prechtal (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
**EP-A1- 2 700 938          EP-A2- 0 443 536**
**EP-A2- 2 503 662          WO-A1-2005/031770**
**WO-A1-2009/033573     DE-A1-102006 045 799**

**Beschreibung**

Die Erfindung betrifft einen optoelektronischen Sensor und ein Verfahren zur Erfassung von Objekten in einem Überwachungsbereich nach dem Oberbegriff von Anspruch 1 beziehungsweise 15.

Für Abstandsmessungen, die einen großen horizontalen Winkelbereich des Messsystems erforderlich machen, eignen sich optoelektronische Systeme und besonders Laserscanner. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder durch mehrere Antastungen desselben Objekts an verschieden Stellen dessen Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Die Abtastung der Überwachungsebene in einem Laserscanner wird üblicherweise dadurch erreicht, dass der Sendestrahl auf einen rotierenden Drehspiegel trifft. Lichtsender, Lichtempfänger sowie zugehörige Elektronik und Optik sind im Gerät fest montiert und vollziehen die Drehbewegung nicht mit. Durch den Spiegel ergeben sich sehr hohe Anforderungen an die Ausrichtung der Lichtsender und Lichtempfänger zur Drehachse. Abweichungen davon führen zu einer verbogenen Überwachungsebene. Außerdem sind solche Optikeinheiten baugroß, weil sich immer ein Teil der Objektweite über den Spiegel bis zur Empfangsoptik in das Gerät erstreckt. Streulichteffekte an der Frontscheibe durch die Frontscheibe selbst oder deren Verunreinigung führen zu einer Beeinträchtigung der Sensorfunktion.

Es ist auch bekannt, den Drehspiegel durch eine mitbewegte Abtasteinheit zu ersetzten. Beispielsweise rotiert in der DE 197 57 849 B4 der gesamte Messkopf mit Lichtsender und Lichtempfänger. Die EP 2 388 619 A1 sieht ebenfalls eine drehbare Sende-/Empfangseinheit vor. Diese Abtasteinheit wird beispielsweise nach dem Transformationsprinzip von den drehfesten Bereichen des Sensors mit Energie versorgt, während die Datenübertragung drahtlos per Funk oder auf optischem Wege erfolgt. Solche drahtlosen Schnittstellen erfordern aber einen hohen Aufwand und verursachen Störstrahlung.

Die EP 2 503 662 A2 offenbart eine berührungslose Energieübertragung in einer Laserentfernungsmessvorrichtung. In einer rotierenden Einheit befinden sich eine Lasereinheit und eine zugehörige Steuerungseinheit. In einer Ausführungsform ist eine erste Leiterplatte unten an der rotierenden Einheit und eine zweite Leiterplatte direkt gegenüber der ersten Leiterplatte im unteren Sockelbereich der Vorrichtung angeordnet. Auf diesen Leiterplatten befinden sich jeweils ein IR-Sender- und Empfängerpaar zur Datenübertragung sowie Wicklungen zur Energieübertragung nach dem Transformatorprinzip.

In der DE 10 2006 045 799 A1 wird ein abtastender Laserabstandssensor beschrieben, bei dem eine oder mehrere Laserdioden auf einem rotierenden Träger angeordnet sind. Die mitdrehende Laserdiode wird über induktive Kopplung zweier Ringspulen kontaktlos versorgt und angesteuert. Die Ringspulen können als Druckschaltung ausgeführt sein. Der Empfänger ist mit seiner optischen Achse längs der Drehachse ausgerichtet und ruht, so dass außer der kontaktlosen induktiven Verbindung zur den Laserdioden keine elektrischen Verbindungen zwischen stationären und rotierenden Teilen erforderlich sind.

Die WO 2009/033573 A1 beschreibt einen Drehübertrager zur berührungslosen Energie- und Datenübertragung. In einem ersten Gehäuseteil ist eine Primärwicklung vorgesehen, die bei Anregung mit einem Wechselstrom in einer Sekundärwicklung eines gegenüber dem ersten Gehäuseteil drehbaren zweiten Gehäuseteils einen Strom induziert. Dabei ist der Drehübertrager für Starkströme von mehr als 10 A ausgelegt. Außerdem weisen die Gehäuseteile jeweils einen Ringeinsatz mit je zwei radial ausgerichteten Kupferbändern auf. Die somit gebildeten kapazitiven Koppelelemente werden zur Datenübertragung genutzt.

Die WO 2005/031770A1 zeigt einen induktiven Drehübertrager, bei dem sich ein rotierender Teil um einen feststehenden Teil dreht und eine Datenübertragungsstrecke mittels mindestens eines induktiven Elements außerhalb der Drehachse angeordnet ist.

Aus der EP 0 443 536 A2 ist eine kapazitive Datenübertragungsvorrichtung bekannt, in der sich zwei gegeneinander drehbare Scheiben gegenüberstehen, bei denen auf der einander zugewandten Fläche jeweils Kondensatoren ausgebildet sind.

Daher ist Aufgabe der Erfindung, den Aufbau eines Sensors mit mitbewegter Abtasteinheit zu vereinfachen.

Diese Aufgabe wird durch einen optoelektronischen Sensor und ein Verfahren zur Erfassung von Objekten in einem Überwachungsbereich nach Anspruch 1 beziehungsweise 15 gelöst. Dabei geht die Erfindung von dem Grundgedanken aus, den Sensor zweiteilig mit einer Sockeleinheit und einer Abtasteinheit aufzubauen. Die Abtasteinheit wird relativ zu der Sockeleinheit bewegt, um den Überwachungsbereich periodisch abzutasten, insbesondere in Drehbewegung versetzt. Die Sockeleinheit bleibt stationär und umfasst alle weiteren ruhenden Elemente des Sensors, beispielsweise ein Gehäuse. Dabei bezieht sich stationär oder ruhend auf ein übliches Bezugssystem des Sensors, der dennoch insgesamt bewegt werden kann, beispielsweise in mobilen Anwendungen an einem Fahrzeug, welches dann das hier als stationär bezeichnete Bezugssystem bildet. Die Erfindung geht dann von dem Grundgedanken aus, die Schnittstellen zwischen Sockeleinheit und Abtasteinheit in zwei Leiterkarten zu integrieren, von denen eine Leiterkarte mit der Sockeleinheit ruht und die andere Leiterkarte sich mit der Abtasteinheit bewegt. Die Leiterkarten sind flächig übereinander angeordnet und stehen vorzugsweise senkrecht zu einer Antriebswelle, welche die Abtasteinheit bewegt. Eine erste Funktion der Schnittstellen oder Übertragungseinheiten ist, die Abtasteinheit mit Energie beziehungsweise Strom oder Spannung zu versorgen. Dazu sind Spulen, insbesondere Planarspulen, in Form von gewundenen Leitungsstrukturen auf den beiden Außenflächen sowie möglicherweise auch in inneren Schichten der Leiterkarten in die Leiterkarten integriert, um die Abtasteinheit kontaktlos induktiv zu versorgen.

Die Erfindung hat den Vorteil, dass ermöglicht wird, die herkömmlichen Umlenkspiegel oder Spiegelräder durch eine mitbewegte Abtasteinheit zu ersetzen, ohne dadurch mechanisch anfällige Schleifkontakte oder sehr aufwändige drahtlose Schnittstellen zu benötigen. Es entsteht ein sehr kompakter, kostengünstiger und robuster Sensor.

Vorteilhafterweise ist die erste Leiterkarte in der Sockeleinheit und die zweite Leiterkarte an einer Welle eines Antriebs für die Abtasteinheit befestigt. Damit sind die Leiterkarten sicher fixiert, und wie gewünscht ruht die erste Leiterkarte in der Sockeleinheit, während die zweite Leiterkarte mit der Abtasteinheit rotiert.

Der Lichtsender und der Lichtempfänger sind bevorzugt in der Abtasteinheit angeordnet. Damit wird die Abtasteinheit zu einem weitgehend autarken Messkopf. Mit Lichtsender und Lichtempfänger sind vorzugsweise auch zugehörige Sende- und Empangsoptiken sowie zumindest ein Teil der Sende- und Empfangselektronik in der Abtasteinheit untergebracht. Lichtsender, Lichtempfänger und/oder deren Elektronik können je nach optischem Aufbau innerhalb der Abtasteinheit auf der zweiten Leiterplatte angeordnet sein. Alternativ wird mindestens eine weitere Leiterplatte in der Abtasteinheit angeordnet, die mit der zweiten Leiterplatte verbunden ist.

Die erste Leiterkarte weist bevorzugt eine Royer-Oszillator-Schaltung auf. Dadurch kann eine stabile, weitgehend oberwellenfreie Schwingung im Resonanzbereich der Spulen erzeugt werden. Dies minimiert Schaltverluste und elektromagnetische Abstrahlung und sorgt für einen hohen Wirkungsgrad der Energieübertragung.

Die zweite Leiterkarte ist bevorzugt kreisförmig ausgebildet. Dadurch wird ein Rotieren ohne Unwucht erleichtert. Die ruhende erste Leiterkarte weist mindestens die kreisförmige Ausdehnung der zweiten Leiterkarte auf, damit sich die beiden Leiterkarten vollständig mit ihren zueinander gerichteten Außenseiten flächig gegenüberstehen. Die erste Leiterkarte kann aber über diese Ausdehnung hinausragen, um beispielsweise weitere Elektronikbauteile oder Befestigungselemente unterzubringen.

Die Spulen sind bevorzugt als zentral angeordnete Windungen um eine Drehachse der Abtasteinheit auf den Leiterkarten ausgebildet. Die Spulen winden sich also innen eng um die Drehachse, insbesondere die Welle des Antriebs. Durch die zentrale Lage können die Spulen besonders wirkungsvoll abgeschirmt werden.

Die Spulen weisen bevorzugt gegenläufige Windungen auf. Es verläuft also mindestens eine Windung mit dem Uhrzeigersinn und eine Windung gegen den Uhrzeigersinn. Soweit möglich, umfassen die Windungen dennoch nahezu 360°, sind also so vollständig, wie das ohne Kurzschluss möglich ist. Eine besonders bevorzugte Ausprägung ist eine selbstkompensierende Doppelwicklung mit einer inneren Windung in der einen und einer äußeren Windung in der anderen Richtung. Die gegenläufigen Windungen ermöglichen einen symmetrischen Aufbau mit optimiertem Feldverlauf, wenn sich im Inneren ein elektrisch leitendes Objekt befindet, wie hier beispielsweise die Motorachse.

Die Übertragungseinheiten weisen bevorzugt einen Resonanzüberträger ohne primärseitige Hilfswicklung und Mittelpunktanzapfung auf. Der Resonanzüberträger soll funktional einem Royer-Oszillator entsprechen, d.h. möglichst oberwellenfrei schwingen. Ein Royer-Oszillator benötigt aber Hilfwicklungen und eine mittige Anzapfung der Spule. Das ist insbesondere bei einem vorteilhaften Spulenaufbau gemäß dem vorigen Absatz schwer oder gar nicht möglich. Durch die angepasste Schaltung können die Vorteile des Royer-Oszillators und des besagten Spulenaufbaus miteinander kombiniert werden.

Die Übertragungseinheiten weisen bevorzugt jeweils einander gegenüberliegende Leiterstrukturen auf den Leiterkarten auf, die mindestens einen Kondensator zur kapazitiven kontaktlosen Datenübertragung bilden. Die Leiterstrukturen sind vorzugsweise paarweise und innerhalb eines Paares gleichartig auf den beiden Leiterkarten vorgesehen. Jedes Paar einander gegenüberstehender Leiterstrukturen bildet dann mit dem Luftspalt zwischen den Leiterplatten beziehungsweise eventuell eingeschlossenem Leiterplattenmaterial oder sonstigem Dielektrikum einen Kondensator. Die gleichen Leiterkarten beziehungsweise die darauf angeordneten Übertragungseinheiten haben zusätzlich zur induktiven Versorgung eine zweite Funktion der kontaktlosen kapazitiven Datenübertragung. Die unterschiedlichen physikalischen Übertragungsprinzipien erleichtern es, gegenseitige Störungen zu verhindern.

Die Leiterstrukturen sind bevorzugt als Kreisringe ausgebildet. Der Mittelpunkt der Kreisringe ist die Drehachse. So stehen die Leiterstrukturen zweier Leiterplatten einander unabhängig von einer Drehstellung der Abtasteinheit bezüglich der Sockeleinheit immer in gleicher Weise gegenüber. Die Kapazität bleibt also während der Abtastbewegung gleich.

Bevorzugt sind mehrere zueinander konzentrische Kreisringe vorgesehen, um mehrere Kondensatoren für eine bidirektionale und/oder differentielle Datenübertragung zu bilden. So können zwei Kondensatoren für bidirektionale Datenübertragung, zwei Kondensatoren für eine robustere differentielle Datenübertragung oder sogar vier Kondensatoren für eine differentielle, bidirektionale Datenübertragung vorgesehen sein.

Die Kreisringe sind bevorzugt untereinander flächengleich. Die durch die unterschiedlichen Innenradien variierenden Kreisumfänge werden dabei durch unterschiedliche Dicken ausgeglichen, also radiale Ausdehnung der Kreisringe, damit die Kapazitäten der gebildeten Kondensatoren untereinander gleich bleiben.

Die Kreisringe der Kapazitäten und die Windungen der Induktivitäten sind bevorzugt konzentrisch um die Drehachse angeordnet, und zwar derart, dass die Kreisringe die Windungen umschließen. Dadurch sind zum einen Energie- und Datenübertragung örtlich entkoppelt. Außerdem wird Störstrahlung durch die innen angeordnete Energieübertragung von der außen liegenden Datenübertragung abgeschirmt.

Die Übertragungseinheiten sind vorzugsweise zumindest teilweise von einem Ferritmantel eingeschlossen. Der Ferritmantel oder Ferritkern schließt den Magnetkreis der Energieversorgung bis auf einen für die Drehbewegung notwendigen Luftspalt ein und erhöht damit den Wirkungsgrad der Übertragung. Im Bereich der Datenübertragung, die deutlich höhere Frequenzen nutzt, dient der Ferritmantel als Abschirmung. Gleichzeitig kann der Ferritmantel für die mechanische Halterung der Übertragungseinheiten genutzt werden.

Die Leiterkarten sind bevorzugt zumindest teilweise von einer magnetischen, schlecht leitenden Abschirmung umgeben. Das verringert etwaige Störstrahlung in beide Richtungen (EMV).

Die Abschirmung weist bevorzugt eine Bodenplatte und eine Deckplatte sowie einen inneren Zylinder auf, so dass eine Drehachse der Abtasteinheit innerhalb des Zylinders und die Leiterkarten konzentrisch zu dem Zylinder sowie zwischen Bodenplatte und Deckplatte angeordnet sind. Diese Geometrie umgibt die Übertragungseinheiten und schirmt die Übertragung damit wirksam nach außen und von außen ab. Da nur ein innerer Zylinder vorgesehen ist, bleibt eine äußere Mantelfläche frei, wo die Leiterplatten befestigt, frei bestückt und kontaktiert werden können. Zum gleichen Zweck ist vorzugsweise der Radius von Boden- beziehungsweise Deckplatte geringer als derjenige der Leiterplatten.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Fig. 1    eine schematische Schnittdarstellung durch einen optoelektronischen Sensor;

Fig. 2    eine vergrößerte Darstellung einer kontaktlosen Anbindung des Sensors gemäß Figur 1;

Fig. 3    eine Draufsicht auf eine Leiterplatte der kontaktlosen Anbindung gemäß Figur 2;

Fig. 4    einen Ausschnitt einer Schaltskizze zur bidirektionalen und differentiellen kapazitiven Datenübertragung;

Fig. 5    eine Draufsicht auf eine weitere Ausführungsform einer Spulenanordnung zur kontaktlosen Anbindung;

Fig. 6    eine Schnittdarstellung zur Erläuterung des Feldverlaufs in einer zusätzlich abgeschirmten Spulenanordnung gemäß Figur 5;

Fig. 7    eine Resonanzübertragerschaltung für die kontaktlose Anbindung insbesondere mit einer Spule gemäß Figur 5; und

Fig. 8    beispielhafte Spannungs- und Ansteuerungsverläufe für die Schaltung gemäß Figur 7.

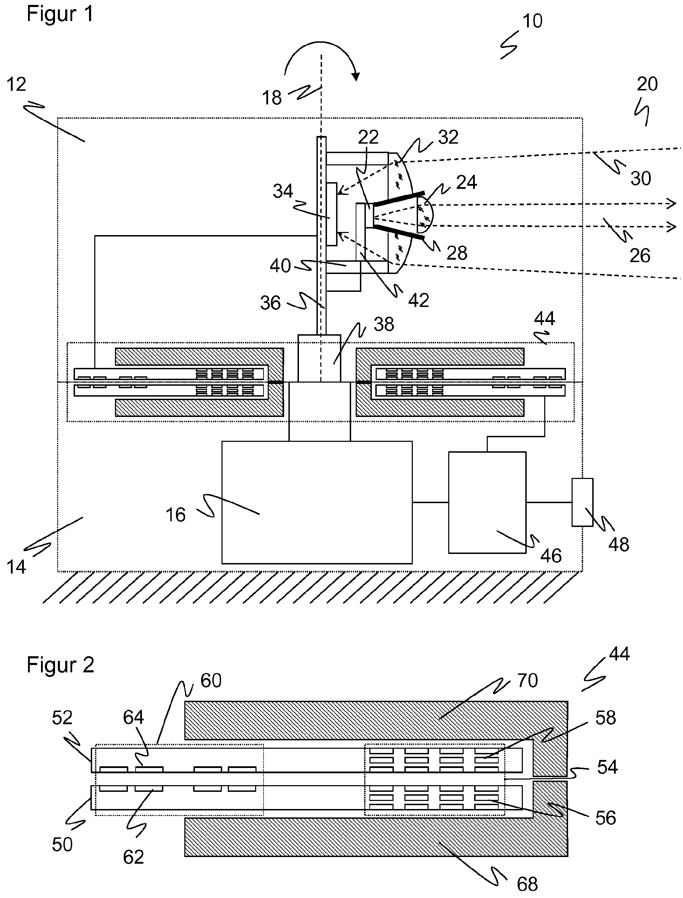

Fig. 1 zeigt eine schematische Schnittdarstellung durch einen optoelektronischen Sensor in einer Ausführungsform als Laserscanner 10. Der Laserscanner 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten.

In der Abtasteinheit 12 erzeugt ein Lichtsender 22 mit Hilfe einer Sendeoptik 24 einen Sendelichtstrahl 26, der in den Überwachungsbereich 20 ausgesandt wird. Zur Vermeidung von Streulicht innerhalb des Laserscanners 10 wird der interne Lichtweg des Sendelichtstrahls 26 von einem lichtundurchlässigen Tubus 28 abgeschirmt. Trifft der Sendelichtstrahl 26 in dem Überwachungsbereich 20 auf ein Objekt, so kehrt ein entsprechender Lichtstrahl als remittiertes Licht 30 zu dem Laserscanner 10 zurück. Das remittierte Licht 30 wird von einer Empfangsoptik 32 auf einen Lichtempfänger 34 geführt und dort in ein elektrisches Empfangssignal gewandelt.

Der Lichtempfänger 34 ist in dieser Ausführungsform auf einer Leiterkarte 36 angeordnet, die auf der Drehachse 18 liegt und mit der Welle 38 des Antriebs 16 verbunden ist. Die Empfangsoptik 32 stützt sich durch Beinchen 40 auf der Leiterkarte 36 ab und hält eine weitere Leiterkarte 42 des Lichtsenders 22. Die beiden Leiterkarten 36, 42 sind untereinander verbunden und können auch als gemeinsame Flexprint-Leiterkarte ausgebildet sein.

Der in Figur 1 gezeigte optische Aufbau mit zwei übereinander geschichteten Leiterkarten 36, 42 oder Leiterkartenbereichen und einer zentral innerhalb der Empfangsoptik 32 angeordneten Sendeoptik 24 ist rein beispielhaft zu verstehen. So wäre alternativ jede andere an sich von einstrahligen optoelektronischen Sensoren oder Laserscannern bekannte Anordnung wie etwa eine Doppelaugenanordnung oder die Verwendung eines Strahlteilerspiegels möglich. Die Erfindung befasst sich weniger mit der konkreten Ausgestaltung von Lichtsender, Lichtempfänger und deren Optiken und Elektronik, sondern vielmehr mit einer kontaktlosen Anbindung 44 der beweglichen Abtasteinheit 12 an die Sockeleinheit 14 zur Energie- und/oder Datenübertragung. Die kontaktlose Anbindung 44 wird weiter unten im Zusammenhang mit den Figuren 2 bis 4 näher erläutert.

Die kontaktlose Anbindung 44 ist in der Abtasteinheit 12 mit der Elektronikkarte 36 und in der Sockeleinheit 14 mit einer Steuer- und Auswertungseinheit 46 verbunden. Auf diese Weise kann die Steuer- und Auswertungseinheit 46 den Lichtsender 22 steuern und erhält das Empfangssignal des Lichtempfängers 34 zur weiteren Auswertung. Die Steuer- und Auswertungseinheit 46 steuert außerdem den Antrieb 16 und erhält das Signal einer nicht gezeigten, von Laserscannern allgemein bekannten Winkelmesseinheit, welche die jeweilige Winkelstellung der Abtasteinheit 14 bestimmt.

Zur Auswertung wird vorzugsweise mit einem Lichtlaufzeitverfahren die Distanz zu einem angetasteten Objekt gemessen. Dazu wird in einem phasenbasierten System das Sendelicht des Lichtsenders 22 moduliert und eine Phasenbeziehung zu dem Empfangssignal des Lichtempfängers 34 ausgewertet. Alternativ werden in einem pulsbasierten System kurze Lichtpulse zu einem Sendezeitpunkt als Sendelicht ausgesandt und aus dem Empfangssignal deren Empfangszeitpunkt ermittelt. Dabei sind sowohl Einzelpulsverfahren, die jeweils aus einem einzigen Sendepuls eine Entfernung bestimmen, als auch Pulsmittelungsverfahren denkbar, in denen das Empfangssignal nach einer Vielzahl aufeinanderfolgender Sendepulse gesammelt und statistisch ausgewertet wird. Die jeweilige Winkelstellung, unter welcher der Sendelichtstrahl 26 jeweils ausgesandt wurde, ist von der Winkelmesseinheit ebenfalls bekannt. Somit stehen nach jeder Scanperiode über den Winkel und die Entfernung zweidimensionale Polarkoordinaten aller Objektpunkte in einer Abtastebene zur Verfügung. Durch eine zusätzliche Verkippung der Abtasteinheit 14 kann auch ein dreidimensionaler Überwachungsbereich 20 erfasst werden.

Damit sind die Objektpositionen beziehungsweise Objektkonturen bekannt und können über eine Sensorschnittstelle 48 ausgegeben werden. Die Sensorschnittstelle 48 oder ein weiterer, nicht gezeigter Anschluss dienen umgekehrt als Parametrierschnittstelle. Bei Anwendungen in der Sicherheitstechnik werden Schutzfelder, die in dem Überwachungsbereich 20 konfiguriert werden können, auf unzulässige Eingriffe überwacht, und daraufhin wird gegebenenfalls ein sicherheitsgerichtetes Abschaltsignal über die dann sicher ausgebildete Schnittstelle 48 (OSSD, Output Signal Switching Device) ausgegeben.

Der Lichtsender 22 kann als einfache Lichtquelle, etwa in Form einer Halbleiterdiode, aber auch als beispielsweise zeilen- oder matrixförmige Anordnung zahlreiche Lichtquellen aufgebaut sein. Entsprechend kann es sich bei dem Lichtempfänger 34 um eine einfache Empfangsfläche, etwa einer Photodiode, oder um eine beispielsweise zeilen- oder matrixförmige Anordnung von Lichtempfangselementen handeln, wie einen CCD- oder CMOS-Chip. Damit entsteht dann nicht nur ein einzelner Abtaststrahl, sondern eine entsprechende Vielzahl zur Aufnahme von zweidimensionalen Bilddaten oder dreidimensionalen Bilddaten mit Hilfe eines Lichtlaufzeitverfahrens. Prinzipiell können nahezu beliebige Sensoreinheiten in der Abtasteinheit 12 rotieren und so den Überwachungsbereich 20 erfassen, beispielsweise auch mehrere Sensoreinheiten in unterschiedlichen Winkelstellungen, die einander mit gleichen oder unterschiedlichen physikalischen Messprinzipien ergänzen. Es besteht auch die Möglichkeit, die Abtasteinheit zusätzlich zu verkippen oder mehrere übereinander angeordnete Lichtsender 22 beziehungsweise Lichtempfänger 34 oder eine insbesondere entfernungsmessende Kamerazeile rotieren zu lassen, um einen dreidimensionalen Raumbereich abzutasten.

Figur 2 zeigt eine Ausschnittvergrößerung eines linken Bereichs der kontaktlosen Anbindung 44 aus Figur 1. Der in Figur 2 nicht gezeigte rechte Bereich der kontaktlosen Anbindung ist nur ein anderer Schnitt durch die insgesamt zylindrische kontaktlose Anbindung 44 und sieht bis auf Spiegelung gleich aus, wie auch aus Figur 1 hervorgeht.

Die kontaktlose Anbindung 44 weist einen unteren Teil mit einer ersten Leiterkarte 50 in der Sockeleinheit 14 und einen oberen Teil mit einer zweiten Leiterkarte 52 in der Abtasteinheit 12 auf. Beispielsweise ist die erste Leiterkarte 50 an einem Gehäuse des Laserscanners 10 und die zweite Leiterkarte 52 an der Welle 38 befestigt. Demzufolge rotiert die zweite Leiterkarte 52 mit der Abtasteinheit 12 gegen die erste Leiterkarte 50 in der stationären Sockeleinheit 14, wobei die Leiterkarten 50, 52 dabei in jeder Winkelstellung flächig übereinander angeordnet und nur durch einen kleinen Spalt getrennt sind.

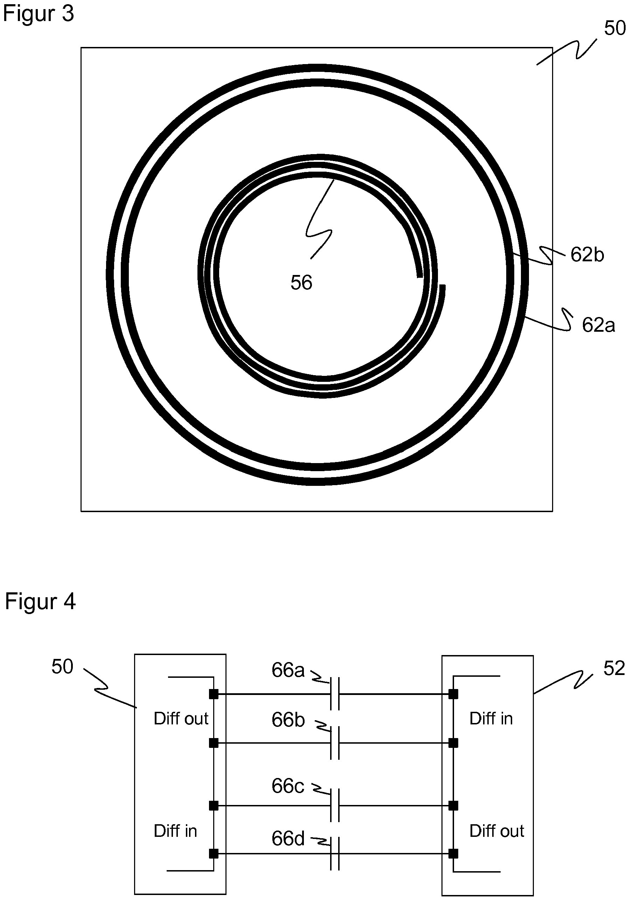

In einem zentralen Bereich, also nahe der Drehachse 18, weisen die Leiterplatten 50, 52 eine kontaktlose Energieversorgung 54 auf. Dazu sind in die Leiterplatten 50, 52 Spulen 56, 58 vorzugsweise als mehrlagige Planarspulen mit Windungen um die Drehachse 18 integriert. Über die Spulen 56, 58 kann die Abtasteinheit 12 induktiv kontaktlos versorgt werden. Die induktive Kopplung beeinflusst das Drehmoment nicht, da die Feldlinien vertikal zu der Drehachse 18 verlaufen. Figur 3 zeigt eine ergänzende Draufsicht auf die erste Leiterkarte 50, wobei in einer Unteransicht der zweiten Leiterkarte 52 vergleichbare Strukturen zu sehen wären.

Um die elektromagnetische Abstrahlung der Spulen 56, 58 gering zu halten und die Schaltfrequenz zu optimieren, ist auf der ersten Leiterplatte 50 vorzugsweise eine nicht dargestellte Royer-Oszillator-Schaltung angeordnet. Diese an sich bekannte Schaltung sorgt für eine oberwellenfreie Ansteuerung der Spulen 56, 58 im Resonanzbereich. Die Transistoren der Schaltung haben außerdem ein vorteilhaftes Schaltverhalten, die das Signal schnell und zuverlässig auf 0V bringen. Dadurch entstehen keine Schaltverluste oder störenden Oberwellen, und es wird ein sauberes sinusförmiges Signal bereitgestellt.

Zusätzlich zur kontaktlosen Versorgung hat die kontaktlose Anbindung 44 vorzugsweise auch die Aufgabe einer kontaktlosen Datenübertragung 60. Dazu sind in einem äußeren Bereich der Leiterplatten 50, 52, also weiter von der Drehachse 18 beabstandet, leitende Kreisringe 62, 64 vorgesehen, welche die Windungen der Spulen 56, 58 umschließen. Jeweils einander gegenüberstehende Kreisringe 62, 64 der beiden Leiterplatten 50, 52 bilden einen Plattenkondensator, der für eine kapazitive Datenübertragung genutzt wird. Da die Kreisringe 62, 64 konzentrisch sind, stehen sich die Kreisringe 62, 64 in jeder Drehstellung der Abtasteinheit 14 weiterhin gegenüber, so dass die kapazitive Kopplung von der Drehbewegung nicht beeinträchtigt wird.

In der Draufsicht gemäß Figur 3 ist eine Ausführungsform mit je zwei Kreisringen 62a-b, in Figur 2 sogar eine Ausführungsform mit je vier Kreisringen gezeigt. Dementsprechend werden mehrere Plattenkondensatoren gebildet, die dafür genutzt werden, Daten bidirektional und/oder differentiell zu übertragen. Eine differentielle Datenübertragung ist unempfindlich gegen Gleichtaktstörungen. Gleichspannungsfreie Datensignale werden beispielsweise durch eine 8B10B-Codierung erreicht.

Figur 4 zeigt einen Ausschnitt einer Schaltskizze zur bidirektionalen und differentiellen kapazitiven Datenübertragung mit vier durch entsprechende Kreisringpaare gebildeten Kondensatoren 66a-d. Der Vorteil einer differentiellen kapazitiven Datenübertragung liegt in dem robusten Störverhalten sowohl hinsichtlich Einstrahlung als auch Abstrahlung. Es lassen sich Datenraten von beispielsweise 2,5 GBit erreichen. Die Kondensatoren 66a-d sollten die gleiche Kapazität haben, was durch Anpassung der Breite der Kreisringe 62, 64 erreicht werden kann, damit diese untereinander flächengleich sind. Die Datenübertragung kann doppelt ausgebildet werden, um mehr Bandbreite oder eine redundante Datenübertragung beispielsweise für Sicherheitsanwendungen zu erzielen.

Wie in Figur 2 zu erkennen, ist die kontaktlose Anbindung 44 von einer zweiteiligen Abschirmung 68, 70 umgeben, beispielsweise einem Ferritmantel. Dies verbessert die induktive Kopplung und sorgt für eine Abschirmung gegen Störstrahlung. Die Abschirmung besteht aus einer Boden- beziehungsweise Deckplatte, welche die Leiterplatten 50, 52 bis zu einem gewissen radialen Abstand zur Drehachse 18 abdecken sowie jeweils einem inneren Zylinder als Abschluss. Es ist denkbar, die Abschirmung 68, 70 zumindest teilweise in die Leiterplatten 50, 52 zu integrieren.

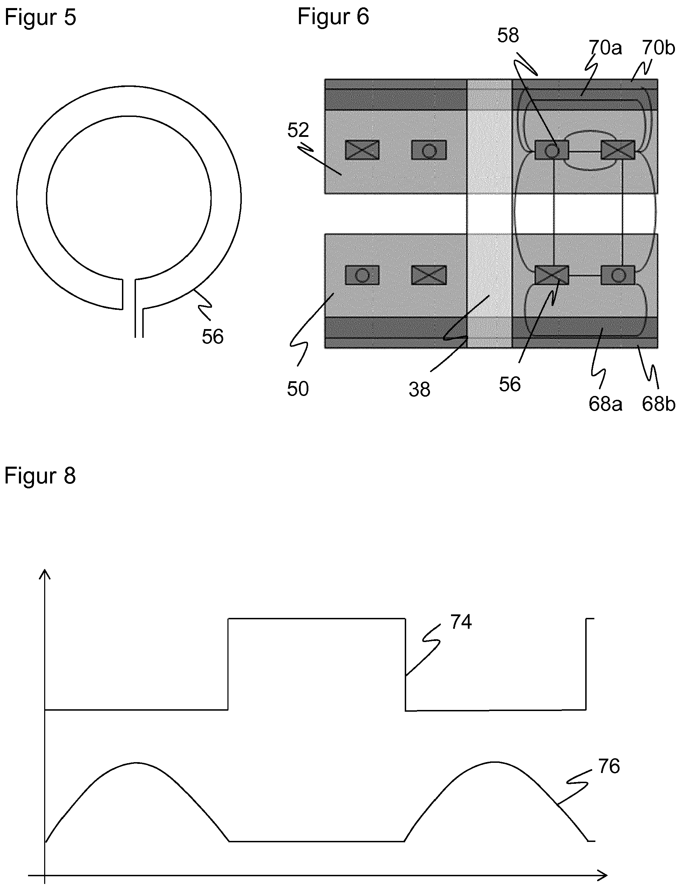

Figur 5 zeigt eine Draufsicht auf eine weitere Ausführungsform einer Spulenanordnung, die sich durch die Gestaltung der Windungen 56, 58 unterscheidet. Es verlaufen nämlich Windungen 56, 58 in zueinander entgegengesetzter Richtung, also mit und gegen den Uhrzeigersinn, wobei Figur 5 gerade die besonders vorteilhafte minimale Konfiguration mit einer derartigen selbstkompensierenden Doppelwindung darstellt. Der vorteilhafte Effekt ist, dass im Inneren der Windungen 56, 58 das Magnetfeld zumindest partiell ausgelöscht wird. Dies ermöglicht einen verlustoptimierten symmetrischen Aufbau um ein elektrisch leitendes Objekt herum, wobei hier natürlich bei einem solchen Objekt im Inneren in erster Linie an die Welle 38 des Antriebs 16 zu denken ist.

Figur 6 zeigt eine vereinfachende Schnittdarstellung des Feldverlaufs an einer solchen Spule gemäß Figur 5 mit selbstkompensierender Doppelwindung 56, 58. Der Bereich der Welle 38 ist zumindest nahezu feldfrei. Als weitere optionale Ausgestaltung ist hier eine zweischichtige Abschirmung mit einer Ferritschicht 68a, 70a direkt über den Windungen 56, 58 und darüber eine weitere leitende Abschirmschicht 68b, 70b beispielsweise aus Kupfer vorgesehen. Die Ferritschicht 68a, 70a beziehungsweise Ferritplatten sorgen für eine Ablenkung des magnetischen Feldes. Dadurch werden die Magnetfelder im Bereich der Energieübertragung konzentriert und die Abstrahlung gering gehalten. Die zusätzliche optionale Kupferschicht 68b, 70b verringert die Abstrahlung noch weiter. Felder, die in der abschirmenden Kupferschicht 68b, 70b ankommen, werden durch Wirbelstromverluste absorbiert und in Wärme umgesetzt.

Über die in Figur 6 gezeigte zweischichtige Abschirmung hinaus kann es sinnvoll sein, die Windungen 56, 58 und gegebenenfalls auch die Kreisringe 62, 64 nicht nur mit Ferrit abzudecken, sondern weitgehend mit Ferrit zu ummanteln. Dadurch wird der Magnetkreis bis auf einen für die Drehbewegung nötigen Luftspalt eingeschlossen. Die Kopplung über den Luftspalt kann durch entsprechende Isolierstoffe mit höherer dielektrischer Konstante verbessert werden. Die Schirmtechnik kann gleichzeitig für die mechanische Halterung von Primär- beziehungsweise Sekundärkreis genutzt werden.

Eine weitere Maßnahme zusätzlich zu der bereits erläuterten differentiellen kapazitiven Datenübertragung besteht in einer Spulentrennung, also dem Vorsehen einer radialen Lücke zwischen Windungen oder Doppelwindungen der Spulen 56, 58. Ähnliches ist auch für die Kreisringe 62, 64 der kapazitiven Datenübertragung denkbar. Die Spulentrennung wird induktiv für eine weiter verbesserte Magnetfeldkonzentration auf den aktiven Bereich genutzt. Außerdem kann die Feldstreuung nach außen reduziert werden.

Der Frequenzbereich der Energieübertragung und der Datenübertragung unterscheidet sich vorteilhafterweise erheblich, und dieser Unterschied kann in einer Größenordnung von drei Zehnerpotenzen liegen. Der Ferritmantel hat in diesen beiden Frequenzbereichen ein sehr unterschiedliches Verhalten. Für die Energieübertragung kann die erhöhte Effizienz genutzt werden, für den Datenverkehr die hohe Abstrahlreduktion nach außen durch Dämpfung.

Figur 7 zeigt eine Resonanzübertragerschaltung, mit der induktiv über die Spulen 56, 58 Energie von der Sockeleinheit 14 in die Abtasteinheit 12 übertragen wird. Der obere Teil dieser Schaltung ist beispielsweise auf der Leiterkarte 52 beziehungsweise vor oder auf der Leiterkarte 52, der untere Teil der Schaltung auf der Leiterkarte 50 beziehungsweise vor oder auf der Steuer- und Auswertungseinheit 46 untergebracht. Der Übergang vom stationären System der Sockeleinheit 14 auf das rotierende System der Abtasteinheit 12 bilden die Induktivität L3, welche der Spule 56, und die Induktivität L4, welche der Spule 58 entspricht. Eine alternative Möglichkeit, diese Schaltung zu gestalten, ist ein an sich bekannter Royer-Oszillator oder Royer-Konverter. Das hat aber den Nachteil, dass es mit der speziellen Spulenform nach Figur 5 nicht ohne Weiteres funktioniert, weil ein Royer-Oszillator Hilfswindungen und einen Mittenabgriff erfordert.

Die in Figur 7 gezeigte Schaltung arbeitet als Resonanzübertrager. Die Ansteuerung über die Schalter S1 und S2 kann gezielt über eine externe Taktquelle oder gleichsam spontan durch Aufschwingen immer vorhandener kleiner Störungen erfolgen. Die Feedbackleitung kann dazu verwendet werden, den Schaltzeitpunkt gerade beim Nulldurchgang der Spannung und damit so festzulegen, dass in dem Schalter S1, S2 keine Schaltverluste entstehen. Als Schalter S1, S2 dienen beispielsweise bipolare Transistoren oder Feldeffekttransistoren.

Die Grundfrequenz der Schaltung ist die Resonanzfrequenz von L3 und C3 sowie L4 und C4 gemäß der üblichen Formel $f = 1/2\pi\sqrt{LC}$. Die Induktivitäten L1 und L2 werden benötigt, um den Schwingkreis von der Versorgungsspannung abzukoppeln. Die Energieübertragung erfolgt von L3 nach L4, und R1 entspricht der Last, also den mitdrehenden Verbrauchern in der rotierenden Ablenkeinheit 12. Ein hinter den Serienschwingkreis aus L4 und C4 angeordneter Gleichrichter übernimmt gemeinsam mit der Kapazität C1 die Umwandlung der übertragenen Wechselspannung in eine Gleichspannung, die das mitdrehende System in der Ablenkeinheit 12 gewöhnlich benötigt.

Im Vergleich mit einem herkömmlichen Royer-Oszillator hat diese Schaltung den Vorteil, dass keine Mittelpunktanzapfung der Primärwicklung und keine Hilfswicklung der Primärwicklung nötig ist. Das macht die Schaltung gemäß Figur 7 besonders geeignet für anhand der Figur 5 beschriebene selbstkompensierende Spulen 56, 58.

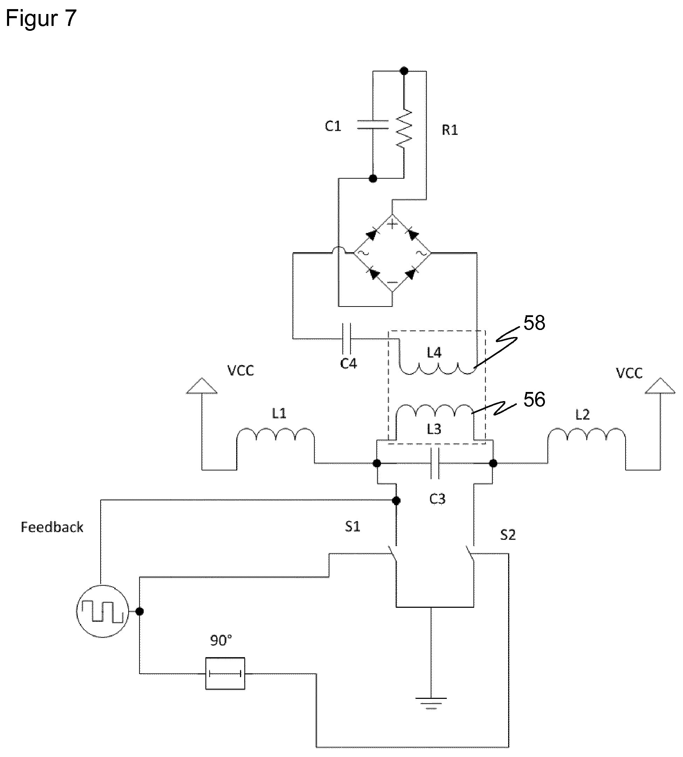

Figur 8 zeigt beispielhafte Spannungs- und Ansteuerungsverläufe für die soeben erläuterte Schaltung gemäß Figur 7. Dabei ist der obere Verlauf 74 die Ansteuerung beispielsweise an S1 und der untere Verlauf 76 der zugehörige Spannungsverlauf. Die Schaltung insgesamt erzeugt somit einen sehr reinen, sinusförmigen Strom ohne Oberwellen durch die Induktivität L3, der dementsprechend bei korrekter Anordnung und räumlicher Nähe in der Induktivität L4 induziert wird.

Die bisherigen Ausführungsformen beschreiben eine Energie- und Datenübertragung auf Leiterkarten 50, 52 mit einem zusätzlichen Antrieb 16. Es ist aber auch denkbar, den Motor zu integrieren, und zwar auf zwei alternativen Wegen. In einer Ausführungsform werden Rotor- und Statorspulen des Motors ähnlich wie die Windungen 56, 58 und die Kreisringe 62, 64 ebenfalls auf die Leiterkarten 50, 52 integriert. Dabei können die Abschirmungen 68, 70 und insbesondere die Ferritkerne mit genutzt werden. In einer anderen Ausführungsform wird die Integration umgekehrt betrieben. Dabei werden die Leiterkarten 50, 52 in den Antrieb 16 integriert. Der Antrieb stellt selbst dann mitbewegte Versorgungs- und Datenanschlüsse zur Verfügung. Beim Aufbau des Laserscanners 10 selbst muss dann die drahtlose Übertragung nicht mehr geplant werden, sondern es können einfach die vorhandenen Anschlüsse des Antriebs 16 genutzt werden.

**Patentansprüche**

1.  Optoelektronischer Sensor (10) zur Erfassung von Objekten in einem Überwachungsbereich (20), insbesondere Laserscanner, mit einem Lichtsender zum Aussenden eines Sendelichtstrahls (26), einem Lichtempfänger (34) zum Erzeugen eines Empfangssignals aus dem von Objekten in dem Überwachungsbereich (20) remittierten Licht (30), einer Sockeleinheit (14), einer gegenüber der Sockeleinheit (14) beweglichen Abtasteinheit (12) zur periodischen Abtastung des Überwachungsbereichs (20) sowie einer Auswertungseinheit (46) zur Erfassung von Informationen über Objekte in dem Überwachungsbereich (20) anhand des Empfangssignals, wobei die Sockeleinheit (14) eine erste Übertragungseinheit (44, 54, 56) und die Abtasteinheit (12) eine zweite Übertragungseinheit (44, 54, 58) zur kontaktlosen Übertragung von Energie zwischen der Sockeleinheit (14) und der Abtasteinheit (12) aufweisen, wobei die Sockeleinheit (14) eine erste Leiterkarte (50) mit der ersten Übertragungseinheit (44, 54, 58) und die Abtasteinheit (12) eine zweite Leiterkarte (52) mit der zweiten Übertragungseinheit (44, 54, 58) aufweist, die beiden Leiterkarten (50, 52) flächig übereinander angeordnet sind und die zweite Leiterkarte (52) mit der Abtasteinheit (12) gegenüber der ersten Leiterkarte (50) beweglich ist, **dadurch gekennzeichnet,**
**dass** die Übertragungseinheiten (44, 54, 56, 58) jeweils in die Leiterkarten (50, 52) integrierte Spulen (56, 58) zur Versorgung der Abtasteinheit (12) durch induktive Kopplung und jeweils einander gegenüberliegende Leiterstrukturen (62, 64) auf den Leiterkarten (50, 52) aufweisen, die mindestens einen Kondensator zur kapazitiven kontaktlosen Datenübertragung (60) bilden.

2. Sensor (10) nach Anspruch 1,
   wobei die erste Leiterkarte (50) in der Sockeleinheit (14) und die zweite Leiterkarte (52) an einer Welle (38) eines Antriebs (16) für die Abtasteinheit (12) befestigt ist.

3. Sensor (10) nach Anspruch 1 oder 2,
   wobei der Lichtsender (22) und der Lichtempfänger (34) in der Abtasteinheit (12) angeordnet sind.

4. Sensor (10) nach einem der vorhergehenden Ansprüche,
   wobei die erste Leiterkarte (50) eine Royer-Oszillator-Schaltung aufweist.

5. Sensor (10) nach einem der vorhergehenden Ansprüche,
   wobei die zweite Leiterkarte (52) kreisförmig ausgebildet ist.

6. Sensor (10) nach einem der vorhergehenden Ansprüche,
   wobei die Spulen als zentral angeordnete Windungen (56, 58) um eine Drehachse (18) der Abtasteinheit (12) auf den Leiterkarten (50, 52) ausgebildet sind.

7. Sensor (10) nach einem der vorhergehenden Ansprüche,
   wobei die Spulen (56, 58) gegenläufige Windungen aufweisen, insbesondere die Spulen (56, 58) eine selbstkompensierende Doppelwicklung mit einer inneren Windung in der einen und einer äußeren Windung in der anderen Richtung aufweisen.

8. Sensor (10) nach einem der vorhergehenden Ansprüche,
   wobei die Übertragungseinheiten einen Resonanzübertrager ohne primärseitige Hilfswicklung und Mittelpunktanzapfung aufweisen.

9. Sensor (10) nach einem der vorhergehenden Ansprüche,
   wobei die Leiterstrukturen (62, 64) als Kreisringe ausgebildet sind.

10. Sensor (10) nach Anspruch 9,
    wobei mehrere zueinander konzentrische Kreisringe (62a-b) vorgesehen sind, um mehrere Kondensatoren für eine bidirektionale und/oder differentielle Datenübertragung (60) zu bilden.

11. Sensor (10) nach Anspruch 10,
    wobei die Kreisringe (62, 64) untereinander flächengleich sind.

12. Sensor (10) nach Anspruch 6 oder 7 und einem der Ansprüche 9 bis 11, wobei die Kreisringe (62, 64) und die Windungen (56, 58) konzentrisch um die Drehachse (18) angeordnet sind, so dass die Kreisringe (62, 64) die Windungen (56, 58) umschließen.

13. Sensor (10) nach einem der vorhergehenden Ansprüche,
    wobei die Übertragungseinheiten (44, 54, 56, 58) zumindest teilweise von einem Ferritmantel (68, 70) eingeschlossen sind.

14. Sensor (10) nach einem der vorhergehenden Ansprüche,
    wobei die Leiterkarten (50, 52) zumindest teilweise von einer magnetischen, schlecht leitenden Abschirmung (68, 70) umgeben sind,
    wobei die Abschirmung (68, 70) eine Bodenplatte und eine Deckplatte sowie einen inneren und/oder äußeren Zylinder aufweist, so dass eine Drehachse (18) der Abtasteinheit (12) innerhalb des Zylinders und die Leiterkarten (50, 52) konzentrisch zu dem Zylinder sowie zwischen Bodenplatte und Deckplatte angeordnet sind.

15. Verfahren zur Erfassung von Objekten in einem Überwachungsbereich (20), bei dem ein Sendelichtstrahl (26) von einer gegenüber einer Sockeleinheit (14) verdrehbaren Abtasteinheit (12) ausgesandt und empfangen wird und ein aus dem empfangenen Sendelichtstrahl (30) erzeugtes Empfangssignal zur Erfassung von Informationen über Objekte in dem Überwachungsbereich (20) ausgewertet wird, wobei zwischen einer ersten Übertragungseinheit (44, 54, 56) der Sockeleinheit (14) und einer zweiten Übertragungseinheit (44, 54, 58) der Abtasteinheit (12) Energie kontaktlos übertragen wird, **dadurch gekennzeichnet, dass** die Übertragungseinheiten (44, 54, 56, 58) die Energie induktiv zwischen Planarspulen (56, 58) übertragen, die in jeweils eine erste Leiterkarte (50) der Sockeleinheit (14) und eine flächig der ersten Leiterkarte (50) gegenüberliegende zweite Leiterkarte (52) der Abtasteinheit (12) integriert sind und dass mit Hilfe von jeweils einander gegenüberliegende Leiterstrukturen (62, 64) der Übertragungseinheiten (44, 54, 56, 58) auf den Leiterkarten (50, 52), die mindestens einen Kondensator bilden, Daten kapazitiv und kontaktlos zwischen Abtasteinheit (12) und Sockeleinheit (14) ausgetauscht werden.

**Claims**

1. An optoelectronic sensor (10) for detecting objects in a monitoring area (20), in particular a laser scanner, having a light transmitter for transmitting a transmission light beam (26), a light receiver (34) for generating a reception signal from remitted light (30) from objects in the monitoring area (20), a base unit (14), a scanning unit (12) movable with respect to the base unit (14) for periodically scanning the monitoring area (20), as well as an evaluation unit (46) for detecting information about objects in the monitoring area (20) based on the reception signal, wherein the base unit (14) comprises a first transfer unit (44, 54, 56) and the scanning unit (12) comprises a second transfer unit (44, 54, 58) for the contactless transfer of energy between the base unit (14) and the scanning unit (12), wherein the base unit (14) comprises a first circuit board (50) with the first transfer unit (44, 54, 58) and the scanning unit (12) comprises a second circuit board (52) with the second transfer unit (44, 54, 56), the two circuit boards (50, 52) are arranged flat one above the other and the second circuit board (52) is movable with the scanning unit (12) with respect to the first circuit board (50), **characterized in that** the transfer units (44, 54, 56, 58) each comprise coils (56, 58) integrated in the circuit boards (50, 52) for supplying the scanning unit (12) by inductive coupling and each comprise conductive structures (62, 64) on the circuit boards (50, 52) which face one another and form at least one capacitor for contactless capacitive data transfer (60).

2. The sensor (10) according to claim 1, wherein the first circuit board (50) is fixed in the base unit (14) and the second circuit board is fixed on a shaft (38) of a drive (16) for the scanning unit (12).

3. The sensor (10) according to claim 1 or 2, wherein the light transmitter (22) and the light receiver (34) are arranged in the scanning unit (12).

4. The sensor (10) according to any of the preceding claims, wherein the first circuit board (50) comprises a Royer oscillator circuit.

5. The sensor (10) according to any of the preceding claims, wherein the second circuit board (52) is circular.

6. The sensor (10) according to any of the preceding claims, wherein the coils are formed on the circuit boards (50, 52) as centrally arranged windings (56, 58) around an axis of rotation (18) of the scanning unit (12).

7. The sensor (10) according to any of the preceding claims, wherein the coils (56, 58) comprise opposite windings, in particular the coils (56, 58) comprise a self-compensating double winding with an inner winding in the one direction and an outer winding in the other direction.

8. The sensor (10) according to any of the preceding claims, wherein the transfer units comprise a resonant transformer without primary side auxiliary winding and center point tapping.

9. The sensor (10) according to any of the preceding claims, wherein the conductive structures (62, 64) are formed as circular rings.

10. The sensor (10) according to claim 9, wherein a plurality of mutually concentric circular rings (62a-b) are provided to form a plurality of capacitors for a bi-directional and/or differential data transfer (60).

11. The sensor (10) according to claim 10, wherein the circular rings (62, 64) have a same area among one another.

12. The sensor (10) according to claim 6 or 7 and one of claims 9 to 11, wherein the circular rings (62, 64) and the windings (56, 58) are arranged concentrically around the axis of rotation (18) so that the circular rings (62, 64) enclose the windings (56, 58).

13. The sensor (10) according to any of the preceding claims,

wherein the transfer units (44, 54, 56, 58) are at least partially enclosed by a ferrite envelope (68, 70).

14. The sensor (10) according to any of the preceding claims,
wherein the circuit boards (50, 52) are at least partially enclosed by a magnetic and poorly conducting shield (68, 70), wherein the shield (68, 70) comprises a bottom plate and a cover plate as well as an inner and/or outer cylinder, so that an axis of rotation (18) of the scanning unit (12) is arranged within the cylinder and the circuit boards (50, 52) are arranged concentrically to the cylinder and between bottom plate and cover plate.

15. A method for detecting objects in a monitoring area (20), wherein a transmission light beam (26) is transmitted and received by a scanning unit (12) rotatable with respect to a base unit (14), and a reception signal generated from the received transmission light beam (30) is evaluated to detect information about objects in the monitoring area (20), wherein there is a contactless energy transfer between a first transfer unit (44, 54, 56) of the base unit (14) and a second transfer unit (44, 54, 58) of the scanning unit (12), **characterized in that** the transfer units (44, 54, 56, 58) transfer energy inductively between planar coils (56, 58) which are respectively integrated in a first circuits board (50) of the base unit (14) and a second circuit board (52) of the scanning unit (12) flatly facing the first circuit board (50), and **in that** there is a capacitive and contactless data exchange between scanning unit (12) and base unit (14) by means of respectively facing conductive structures (62, 64) of the transfer units (44, 54, 56, 58) on the circuits boards (50, 52) forming at least one capacitor.

**Revendications**

1. Capteur optoélectronique (10) pour la détection d'objets dans une zone de surveillance (20), en particulier scanner à laser, comprenant un émetteur de lumière pour émettre un rayon de lumière émise (26), un récepteur de lumière (34) pour engendrer un signal de réception à partir de la lumière réémise (30) par des objets dans la zone de surveillance (20), une unité formant socle (14), une unité de palpage (12) déplaçable par rapport à l'unité formant socle (14) pour palper périodiquement la zone de surveillance (20), et une unité d'évaluation (46) pour la détermination d'informations concernant des objets dans la zone de surveillance (20) au moyen du signal de réception, dans lequel l'unité formant socle (14) comprend une première unité de transmission (44, 54, 56) et l'unité de palpage (12) comprend une seconde unité de transmission (44, 54, 58) pour la transmission sans contact d'énergie entre l'unité formant socle (14) et l'unité de palpage (12), dans lequel l'unité formant socle (14) comprend une première carte à circuits (50) avec la première unité de transmission (44, 54, 58), et l'unité de palpage (12) comprend une seconde carte à circuits (52) avec la seconde unité de transmission (44, 54, 58), les deux cartes à circuits (50, 52) sont agencées à plat l'une au-dessus de l'autre, et la seconde carte à circuits (52) avec l'unité de palpage (12) est déplaçable par rapport à la première carte à circuits (50),
**caractérisé en ce que**
les unités de transmission (44, 54, 56, 58) comprennent respectivement des bobines (56, 58) intégrées dans les cartes à circuits (50, 52) pour l'alimentation de l'unité de palpage (12) par couplage inductif, et comprennent respectivement des structures conductrices (62, 64) mutuellement opposées sur les cartes à circuits (50, 52), qui forment au moins un condensateur pour la transmission de données (60) capacitive sans contact.

2. Capteur (10) selon la revendication 1,
dans lequel la première carte à circuits (50) est fixée dans l'unité formant socle (14) et la seconde carte à circuits (52) est fixée sur un arbre (38) d'un entraînement (16) pour l'unité de palpage (12).

3. Capteur (10) selon la revendication 1 ou 2,
dans lequel l'émetteur de lumière (22) et le récepteur de lumière (34) sont agencés dans l'unité de palpage (12).

4. Capteur (10) selon l'une des revendications précédentes,
dans lequel la première carte à circuits (50) comporte un circuit oscillateur de Royer.

5. Capteur (10) selon l'une des revendications précédentes,
dans lequel la seconde carte à circuits (52) est réalisée sous forme circulaire.

6. Capteur (10) selon l'une des revendications précédentes,
dans lequel les bobines sont réalisées comme des enroulements (56, 58) agencés au centre autour d'un axe de rotation (18) de l'unité de palpage (12) sur les cartes à circuits (50, 52).

7. Capteur (10) selon l'une des revendications précédentes,
dans lequel les bobines (56, 58) comprennent des enroulements en sens contraire, en particulier les bobines (56, 58) comprennent un double enroulement à auto-compensation avec un enroulement intérieur dans une direction et un enroulement extérieur dans l'autre direction.

**8.** Capteur (10) selon l'une des revendications précédentes,
dans lequel les unités de transfert comprennent un transmetteur à résonance sans enroulement auxiliaire côté primaire et prise centrale.

**9.** Capteur (10) selon l'une des revendications précédentes,
dans lequel les structures conductrices (62, 64) sont réalisées sous forme d'anneaux circulaires.

**10.** Capteur (10) selon la revendication 9,
dans lequel il est prévu plusieurs anneaux circulaires (62a-b) mutuellement concentriques, afin de former plusieurs condensateurs pour une transmission de données (60) bidirectionnelle et/ou différentielle.

**11.** Capteur (10) selon la revendication 10,
dans lequel les anneaux circulaires (62, 64) présentent entre eux la même surface.

**12.** Capteur (10) selon la revendication 6 ou 7 et l'une des revendications 9 à 11,
dans lequel les anneaux circulaires (62, 64) et les enroulements (56, 58) sont agencés concentriquement autour de l'axe de rotation (18), de sorte que les anneaux circulaires (62, 64) enferment les enroulements (56, 58).

**13.** Capteur (10) selon l'une des revendications précédentes,
dans lequel les unités de transfert (44, 54, 56, 58) sont au moins partiellement enfermées par une enveloppe en ferrite (68, 70).

**14.** Capteur (10) selon l'une des revendications précédentes,
dans lequel les cartes à circuits (50, 52) sont entourées au moins partiellement par un blindage magnétique mauvais conducteur (68, 70), dans lequel le blindage (68, 70) comprend une plaque inférieure et une plaque supérieure ainsi qu'un cylindre intérieur et/ou extérieur, de sorte qu'un axe de rotation (18) de l'unité de palpage (12) est agencé à l'intérieur du cylindre et que les cartes à circuits (50, 52) sont agencées concentriquement au cylindre et entre la plaque inférieure et la plaque supérieure.

**15.** Procédé pour la détection d'objets dans une zone de surveillance (20), dans lequel on émet un rayon de lumière émise (26) depuis une unité de palpage (12) capable de rotation par rapport à une unité formant socle (14) et on le reçoit, et un signal de réception engendré à partir du rayon de lumière émise reçue (30) est exploité pour la détection d'informations concernant des objets dans la zone de surveillance (20), dans lequel de l'énergie est transmise sans contact entre une première unité de transmission (44, 54, 56) de l'unité formant socle (14) et une seconde unité de transmission (44, 54, 58) de l'unité de palpage (12),
**caractérisé en ce que**
les unités de transmission (44, 54, 56, 58) transmettent l'énergie de manière inductive entre des bobines planaires (56, 58), qui sont intégrées respectivement dans une première carte à circuits (50) de l'unité formant socle (14) et dans une seconde carte à circuits (52), opposée sur le plan surfacique à la première carte à circuits (50), de l'unité de palpage (12), et **en ce qu'**avec l'aide de structures conductrices (62, 64) respectives mutuellement opposées des unités de transmission (44, 54, 56, 58) sur les cartes à circuits (50, 52), qui forment au moins un condensateur, des données sont échangées par voie capacitive et sans contact entre l'unité de palpage (12) et l'unité formant socle (14).

Figur 1

Figur 2

Figur 3

50

62b

62a

56

Figur 4

50

52

66a

66b

66c

66d

Diff out

Diff in

Diff in

Diff out

Figur 5

Figur 6

Figur 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4340756 A1
- DE 19757849 B4
- EP 2388619 A1
- EP 2503662 A2
- DE 102006045799 A1
- WO 2009033573 A1
- WO 2005031770 A1
- EP 0443536 A2